(19) Europäisches Patentamt
European Patent Office
Office européen des brevets

(11) **EP 2 042 712 B1**

(12) **FASCICULE DE BREVET EUROPEEN**

(45) Date de publication et mention de la délivrance du brevet:
**04.07.2012 Bulletin 2012/27**

(51) Int Cl.:
**F02D 41/00** *(2006.01)*　　*F02B 37/18 (2006.01)*
*F02B 37/24 (2006.01)*

(21) Numéro de dépôt: **08290860.9**

(22) Date de dépôt: **11.09.2008**

(54) **Procédé pour contrôler un turbocompresseur à l'aide d'un modèle physique du régime du turbocompresseur**

Verfahren zum Kontrollieren eines Turbokompressors mit Hilfe eines physikalischen Modells der Betriebsparameter des Turbokompressors

Method for controlling a turbocharger with the help of a physical model of the turbocharger's load

(84) Etats contractants désignés:
**GB IT**

(30) Priorité: **28.09.2007 FR 0706854**

(43) Date de publication de la demande:
**01.04.2009 Bulletin 2009/14**

(73) Titulaire: **IFP Energies nouvelles**
**92852 Rueil-Malmaison Cedex (FR)**

(72) Inventeurs:
• **Youssef, Bilal**
**92500 Rueil-Malmaison (FR)**
• **Moulin, Philippe**
**75009 Paris (FR)**

(56) Documents cités:
**EP-A- 1 586 756　　FR-A- 2 898 156**
**US-A- 6 067 800　　US-A1- 2003 101 723**

## Description

La présente invention concerne le domaine du contrôle d'un moteur à combustion interne, et plus particulièrement du contrôle d'un système turbocompresseur équipant un tel moteur.

Les nouvelles technologies développées pour les moteurs à combustion interne, font de plus en plus appel à un contrôle moteur avancé. Dans ce contexte, les nouvelles architectures du système de fluide nécessitent le développement de nouvelles stratégies de commande pour le système turbocompresseur.

### État de la technique

Actuellement, pour contrôler un tel système, on développe des stratégies de commande pour le système turbocompresseur basées sur des cartographies statiques avec des contrôleurs linéaires. Cependant, ces stratégies se révèlent insuffisantes, car elles présentent les inconvénients suivants:

- manque de robustesse par rapport aux dispersions des actionneurs et des composants ;

- effort de mise au point important : d'une part l'ensemble des cartographies statiques doivent être renseignées manuellement, d'autre part les gains des régulateurs doivent varier suivant le point de fonctionnement ;

- aucune prise en compte des interactions du système de suralimentation avec les autres sous systèmes moteur (et donc un changement dans la mise au point de ces sous systèmes nécessite une remise au point complète du régulateur de suralimentation).

Les stratégies classiques basées sur des cartographies statiques avec des contrôleurs proportionnels intégraux (PI) ne suffisent donc pas. L'introduction de structures de commande, basées sur un modèle, semble être efficace et prometteuse pour faire face à ce problème, et remplacer les contrôleurs linéaires conventionnels. Dans ce contexte, quelques approches basées sur un modèle ont déjà été proposées dans :

Schwarzmann, D., Nitsche, R., Lunze, J. "Diesel Boost Pressure Control using Flatness-Based Internal Model Control". SAE paper 2006-01-0855
Stefanopoulo, A.G, Kolmanowsky, I., Freudenberg, J.S. "Control of Variable Geometry Turbocharged Diesel Engines for Reduced Emissions". IEEE transactions on control systems technology, vol.8 no4 July 2000
Ces stratégies sont basées sur des modèles, c'est-à-dire des représentations, physiques, graphiques, ou plus généralement mathématiques, des relations qui existent réellement ou qui, par hypothèse, semblent exister entre des phénomènes ou entre les différents éléments du système turbocompresseur.

Cependant, ces modèles, décrits dans la littérature et destinés à être utilisés dans une loi de commande, présentent deux défauts majeurs : d'une part une complexité trop grande, ce qui conduit à des problèmes de réglages et de mise au point, et d'autre part, ces modèles ne prennent pas en compte la dynamique. En effet, ces méthodes classiques de régulation de turbocompresseurs sont basées sur des cartographies correspondant à des points de fonctionnement statiques. On fait alors l'hypothèse qu'en dynamique, le système passe par une succession d'états stationnaires (quasi statique).

Le document US 2003/101723 décrit un autre example de régulation d'un turbocompresseur.

Ainsi, l'objet de l'invention est un procédé alternatif pour contrôler un turbocompresseur en dynamique, simple à régler et mettre au point.

### Le procédé selon l'invention

Le procédé selon l'invention permet de contrôler un turbocompresseur comportant une turbine et équipant un moteur à combustion interne, dans lequel on détermine une pression de consigne $P_i^C$, correspondant à une pression de fluide dans un collecteur d'admission du moteur. Le procédé comporte les étapes suivantes :

- on transforme la consigne de pression $P_i^C$ en une valeur de régime désirée $N_d$ ;
- on définit une relation physique reliant un régime N du turbocompresseur à un rapport $PR_t$ d'une pression de fluide en sortie de la turbine sur une pression de fluide en entrée de la turbine ;
- on calcule un rapport désiré $PR_t^C$ des pressions au niveau de la turbine, en appliquant la relation à la valeur de régime désirée $N_d$;

- on estime une loi de commande d'un actionneur de la turbine, $U_{VGT}{}^C$, au moyen d'une cartographie de la turbine représentant une évolution d'un débit de fluide entrant dans la turbine $W_t$ en fonction du rapport des pressions au niveau de la turbine, $PR_t$, pour différentes lois de commande de l'actionneur, et à partir d'une mesure du débit de fluide entrant dans la turbine $W_t^m$, du rapport désiré des pressions au niveau de la turbine, $PR_t{}^C$ ; et

- on applique la loi de commande $U_{VGT}{}^C$ à l'actionneur de la turbine, de façon à ce que la pression $P_i$ dans le collecteur d'admission soit égale à la pression de consigne $P_i{}^C$.

L'actionneur de la turbine peut correspondre à une valve de type « *wastegate* » (turbo à géométrie fixe), ou aux pales de la turbine (turbocompresseur à géométrie variable)

Pour transformer la consigne de pression ($P_i{}^C$) en une valeur de régime désiré ($N_d$), on peut utiliser une cartographie d'un compresseur équipant le turbocompresseur.

Selon l'invention, on peut définir la relation physique à partir d'une relation d'équilibre entre une puissance turbine et une puissance compresseur, en appliquant un principe d'équilibre de masses dans le collecteur d'admission et un collecteur d'échappement, et en appliquant une technique de "*back-stepping*" dans laquelle on définit une commande qui force le régime du turbocompresseur à suivre une dynamique donnée. La dynamique peut être exponentielle, et s'exprimer de la façon suivante :

$$\frac{d(N - N_d^2)}{dt} = -\mu\left(N - N_d^2\right)$$

où $\mu$ est un gain défini expérimentalement.

On peut estimer la loi de commande en approximant la cartographie de la turbine. Pour ce faire, on peut approximer la cartographie de la turbine, par des équations du type :

$$W_t = \left(a.G(U_{vGT}) + b\right)\Psi(PR_t)$$

avec :

$a, b$ :  deux paramètres à identifier

$U_{VGT}$ :  une loi de commande de l'actionneur

$G(U_{VGT})$ :  une fonction polynomiale bijective de $U_{VGT}$

$$\Psi(PR_t) = \sqrt{\frac{2\gamma.PR_t}{\gamma(\gamma - 1)}} . \sqrt{PR_t^{\frac{-2}{\gamma}} - PR_t^{\frac{-\gamma - 1}{\gamma}}}$$

$\gamma$ :  rapport de chaleur spécifique

Les deux paramètres $a$ et $b$ peuvent être identifiés par optimisation hors ligne, et ils peuvent être corrigés en ligne par un intégrateur, de façon à ce que le rapport de pression turbine $PR_t$ suive celui désiré $PR_t{}^C$.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- la figure 1 schématise un moteur comportant un turbocompresseur.

- la figure 2 illustre une cartographie de la turbine.

- la figure 3 illustre le procédé de contrôle d'un turbocompresseur.

- la figure 4 montre les deux paramètres *a* et *b* en fonction du régime turbocompresseur modifié.

- la figure 5 montre une comparaison entre le débit turbine donné par le constructeur (cercle) et l'estimation (croix).

- les figures 6A à 6D illustrent des résultats du procédé de contrôle selon l'invention.

**Description détaillée du procédé**

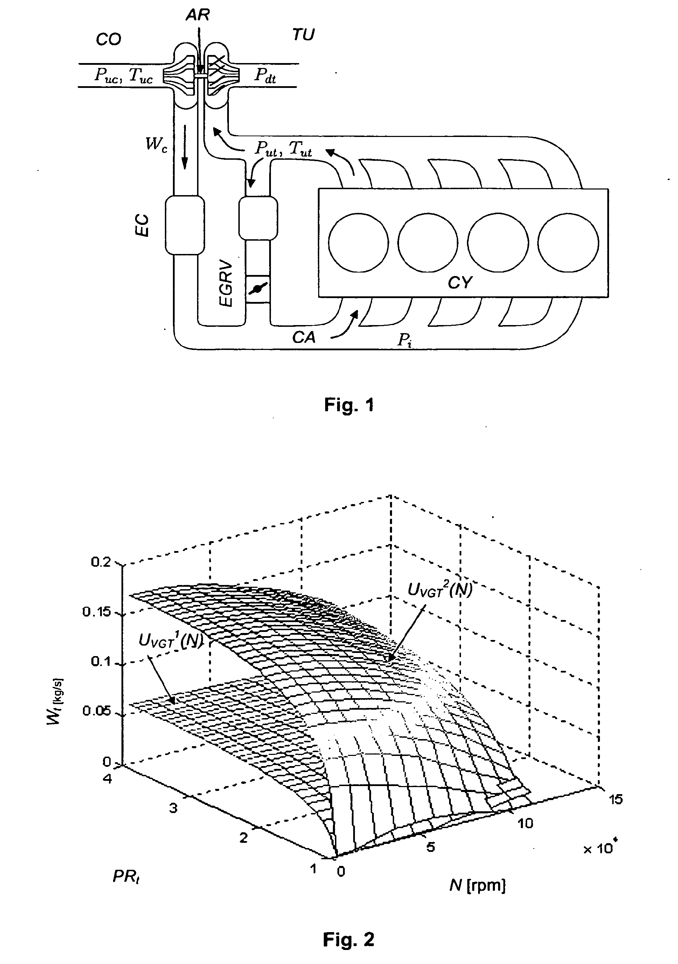

La figure 1, représente schématiquement un moteur comportant un turbocompresseur. Un turbocompresseur est un élément qui peut être intégré à un moteur à combustion interne. Un tel système est destiné à augmenter la pression des gaz admis dans le moteur. Le turbocompresseur permet ainsi un meilleur remplissage des cylindres en air. Le principe de fonctionnement consiste à récupérer une partie de l'énergie cinétique contenue dans les gaz d'échappement.

Une turbine (*TU*) placée dans le flux des gaz d'échappement sortant du moteur est entraînée à grande vitesse. Elle est reliée par un arbre (AR) à un compresseur (*CO*) placé dans le collecteur d'admission (*CA*) du moteur. Ce compresseur aspire et comprime l'air ambiant, l'envoie dans les cylindres (*CY*), en passant éventuellement par un échangeur à chaleur (*EC*) pour le refroidir. En envoyant l'air comprimé dans les cylindres, on améliore leur remplissage. On augmente ainsi la quantité du mélange comburant/carburant, et donc, la puissance du moteur.

La turbine est une turbine à géométrie variable. Le moteur peut également comporter une valve EGR (EGRV) pour récupérer une partir des gaz brûlés.

Selon l'invention, on contrôle le turbocompresseur par régulation de la pression $P_i$ dans le collecteur d'admission, en modifiant la géométrie de la turbine. Cette pression est régulée par un régulateur qui est commandé par un boîtier électronique selon une cartographie mise en mémoire. Une cartographie est un ensemble de données mises en mémoire dans le calculateur du moteur. Une cartographie sert de référence au calculateur pour commander de façon optimale son logiciel, appelé régulateur.

Ainsi une pression dans le collecteur d'admission optimale est déterminée en fonction des conditions de fonctionnement du moteur et des performances attendues. On appelle cette valeur « consigne », et on la note : $P_i^C$.

Le but du procédé de contrôle est donc de modifier la géométrie de la turbine de façon à ce que la pression $P_i$ dans le collecteur d'admission, soit égale à la pression de consigne $P_i^C$.

Pour modifier la géométrie de la turbine, on utilise une loi de commande de l'actionneur de la turbine. Cet actionneur, en changeant de position, modifie le débit de fluide entrant dans la turbine $W_t$, et par voie de conséquence, le débit de fluide en aval du compresseur, $W_C$. Une telle loi de commande est notée $U_{VGT}$.

On dispose d'une cartographie de la turbine, fournie par le constructeur. Cette cartographie représente l'évolution du débit de fluide entrant dans la turbine $W_t$, en fonction du rapport des pressions au niveau de la turbine, $PR_t$, pour différentes lois de commande $U_{VGT}^1$, $U_{VGT}^2$, $U_{VGT}^3$, ... comme l'illustre la figure 2.

Le rapport des pressions au niveau de la turbine, $PR_t$, correspond au rapport de la pression en aval de la turbine, sur la pression en amont de la turbine.

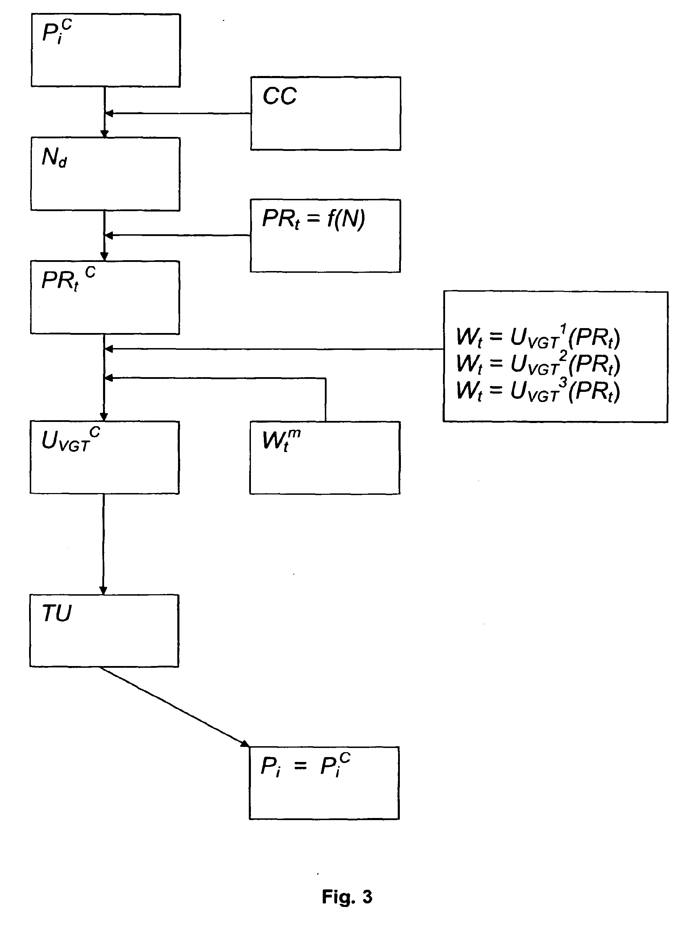

Le procédé selon l'invention permet de déterminer une loi de commande de l'actionneur de la turbine, $U_{VGT}^C$, à l'aide d'une cartographie de la turbine, et d'un modèle physique décrivant la dynamique du turbocompresseur. La figure 3 illustre le procédé, qui comporte principalement quatre étapes :

1.- Modèle physique de l'évolution du régime (*N*) du turbocompresseur

2.- Transformation de la consigne de pression ($P_i^C$) en régime désiré ($N_d$)

3.- Définition d'une loi de commande de l'actionneur de la turbine, $U_{VGT}^C$

4.- Modification de la géométrie de la turbine selon la loi de commande $U_{VGT}^C$

Conformément à la figure 1, les notations suivantes sont utilisées dans la description.

| | |
|---|---|
| $T_{ut}$ | Température en amont de la turbine |
| $T_{uc}$ | Température en amont du compresseur |

(suite)

| | |
|---|---|
| $P_{dt}$ | Pression en aval de la turbine |
| $P_{ut}$ | Pression en amont de la turbine |
| $P_{uc}$ | Pression en amont du compresseur |
| $W_c$ | Débit de fluide en aval du compresseur |
| $P_i$ | Pression dans le collecteur d'admission |
| $N$ | Régime du turbocompresseur |
| $PR_t$ | Rapport de pression au niveau de la turbine |

On précise que l'expression « *en aval* » signifie « *en sortie* », et l'expression « *en amont* » signifie « *en entrée* ». La pression et la température caractérisent l'air. On adopte également les notations suivantes :

On précise également que l'on entend par fluide, tout mélange circulant dans les collecteurs du moteur et le turbocompresseur. Il peut par exemple s'agir d'un mélange comportant au moins l'un des éléments suivants : air, gaz d'échappement, gaz de surpression,

| | | | |
|---|---|---|---|
| $t$ | temps | $r$ | Constante des Gaz |
| $PR_c$ | Rapport de Pression Compresseur | $C_p$ | Chaleur Spécifique |
| J | Inertie Turbo | $T_{ref}$ | Température de Référence |
| $P_t$ | Puissance de la turbine | $P_{ref}$ | Pression de Référence |
| $P_c$ | Puissance Compresseur | $M_e$ | Masse Gaz collecteur Échappement |
| $W_t$ | Débit Turbine | $M_i$ | Masse Gaz collecteur Admission |
| $W_t$ | Débit Turbine | $N_d$ | Régime Turbo Désiré |
| $\eta_t$ | Efficacité Turbine | $\gamma$ | Rapport Chaleur Spécifique |
| $\eta_c$ | Efficacité Compresseur | | |

1.- <u>Modèle physique de l'évolution du régime ($N$) du turbocompresseur</u>

Selon l'invention, le modèle physique décrivant la dynamique du turbocompresseur, est un modèle physique qui décrit le rapport des pressions au niveau de la turbine, $PR_t$, en fonction au moins du régime du turbocompresseur. On peut utiliser un modèle physique qui décrit le rapport des pressions au niveau de la turbine, $PR_t$, en fonction :

- du régime, de l'inertie et de la puissance du turbocompresseur ;

- du débit de la turbine et de la température en amont de la turbine.

Selon un mode de réalisation, le modèle utilisé est de la forme :

$$PR_t = T_0(J, W_t, C_p \eta_t T_{ut})\big(T_1(N) + T_2(N) + T_3(J, P_c) + T_4(N)\big)$$

Avec :

- $T_1(N)$ un terme relatif à l'accélération désirée de l'arbre (AR) du turbocompresseur

- $T_2(N)$ un terme relatif à une loi décrivant la puissance prélevée par le compresseur sur l'arbre du turbocompresseur

- $T_3(J, P_c)$ un terme relatif à la dynamique désirée pour le turbocompresseur

- $T_4(N)$ un terme facultatif, permettant de compenser les erreurs de modélisations

- $T_0$ un terme correspondant à l'inversion entre la puissance fournie à la turbine et le taux de détente à ses bornes

En adoptant les notations suivantes :

$y$ : le régime au carré ($N^2$)
$y_d$ : le régime désiré au carré ($N_d^2$)
$\mu$ : un gain défini expérimentalement

On peut définir un modèle physique de l'évolution du régime ($N$) du turbocompresseur par la relation suivante :

$$1 - \left(\frac{1}{PR_t}\right)^{\frac{\gamma-1}{\gamma}} = \frac{1}{\alpha_t}\left(\frac{dy_d}{dt} - \mu(y - y_d) + \beta_c + \lambda \int (y - y_d)\right) \qquad (1)$$

où l'on retrouve :

$$\frac{dy_d}{dt}$$ :l'accélération de l'arbre (AR) du turbocompresseur

- $\mu(y - y_d)$ :loi exponentielle décrivant la dynamique désirée du régime

$$\beta_c = \frac{2}{J}P_c$$ :terme représentant la puissance du compresseur, pour une compensation quasi statique

$\lambda \int (y - y_d)$ :terme intégral permettant de compenser les erreurs de modélisations

$$\alpha_t = \frac{2}{J}W_t C_p \eta_t T_{w}$$ : terme représentant le rapport entre la puissance turbine et $1 - \left(\frac{1}{PR_t}\right)^{\frac{\gamma-1}{\gamma}}$

Une méthode permettant de construire un tel modèle est décrite ci-après.

Construction du modèle physique

Pour modéliser physiquement la dynamique du turbocompresseur on considère que l'évolution du régime ($N$) du turbocompresseur est obtenue à partir de l'équilibre des puissances turbine ($P_t$) et compresseur ($P_c$) :

$$P_t - P_c = J.N.\frac{dN}{dt} \qquad (2)$$

Les pertes liées aux frottements sont négligées. $J$ est le moment d'inertie des parties tournantes du turbocompresseur (arbre et roues compresseur et turbine).
En appliquant le principe de l'équilibre des masses dans les collecteurs d'admission et d'échappement et en considérant que les dynamiques des collecteurs d'admission et d'échappement sont plus rapides que celles du turbocompresseur, on peut écrire :

$$W_t = W_c + W_f \qquad (3)$$

$W_f$ est un faible débit dû à l'injection du carburant dans les cylindres.
On en déduit une relation permettant d'exprimer le régime ($N$) du turbocompresseur en fonction du rapport de pression et du débit compresseur ($PR_c$):

$$N = f_5\left(W_c \frac{\sqrt{T_{uc}}\, P_{ref}}{\sqrt{T_{ref}}\, P_{uc}},\; PR_c\right)\frac{\sqrt{T_{uc}}}{\sqrt{T_{ref}}} \tag{4}$$

La fonction $f_5$ peut être définie à l'aide de construction de cartographies sur banc moteur.

Puis, à partir de cette représentation, on élabore une loi de commande en utilisant une technique de "back-stepping".

Le "Back-stepping" est une technique permettant de définir des contrôleurs pour des systèmes non linéaires. Il s'agit d'une technique récursive, basée sur la synthèse récurrente de fonctions de Lyapunov, qui assure pas à pas la stabilisation de chaque étage du système. A chaque étape du processus, une commande virtuelle est ainsi générée pour assurer la convergence du système vers son état d'équilibre. Cette technique permet également de construire un contrôleur adaptatif. Elle est décrite dans le document suivant :

Kristicacute M., Kanellakoupoulos I., Kokotovic P.V. "Nonlinear and adaptive control design", Control System Technology and Automation. Wiley, 1995.

Par conséquent, à l'aide d'une technique de "*back-stepping*", on définit une commande qui force le régime du turbocompresseur à suivre une dynamique donnée. On peut par exemple choisir une dynamique exponentielle, qui s'exprime de la façon suivante :

$$\frac{d(y - y_d)}{dt} = -\mu(y - y_d) \tag{5}$$

avec :

$y$ : le régime au carré ($N^2$)
$y_d$ : le régime désiré au carré ($N_d^2$)
$\mu$ : un gain défini expérimentalement

L'application d'une technique de "*back-stepping*", avec la dynamique précédente nous donne :

$$u_t = \frac{1}{\alpha_t}\left(\frac{dy_d}{dt} - \mu(y - y_d) + \beta_c\right)$$

En notant :

$$\alpha_t = \frac{2}{J} W_t C_p \eta_t T_{ut}$$

$$\beta_c = \frac{2}{J} P_c$$

$$u_t = 1 - \left(\frac{1}{PR_t}\right)^{\frac{\gamma-1}{\gamma}}$$

$$y = N^2$$

Notons que les paramètres $\alpha_t$ et $\beta_t$ définis ci-dessus, peuvent être calculés en utilisant les variables mesurées et les cartographies d'efficacités du turbocompresseur. Comme les efficacités de la turbine et du compresseur varient lentement avec le régime turbocompresseur, elles peuvent être considérées constantes dans la loi de commande.

Un terme intégral peut être ajouté au modèle pour compenser les erreurs de modélisations. La loi de commande finale est alors obtenues :

$$1 - \left(\frac{1}{PR_t^d}\right)^{\frac{\gamma-1}{\gamma}} = \frac{1}{\alpha_t}\left(\frac{dy_d}{dt} - \mu(y - y_d) + \beta_c + \lambda \int (y - y_d)\right)$$

2.- <u>Transformation de la consigne de pression ($P_i^C$) en régime désiré ($N_d$).</u>

Le but du procédé de contrôle est de modifier la géométrie de la turbine de façon à ce que la pression $P_i$ dans le collecteur d'admission, soit égale à la pression de consigne $P_i^C$.

Pour ce faire, on dispose d'une cartographie de la turbine, fournie par le constructeur. Cette cartographie représente l'évolution du débit de fluide entrant dans la turbine $W_t$, en fonction du rapport des pressions au niveau de la turbine, $PR_t$, pour différentes lois de commande $U_{VGT}1$, $U_{VGT}2$, $U_{VGT}3$ ...

On dispose également du modèle physique reliant le régime ($N$) du turbocompresseur au rapport des pressions au niveau de la turbine, $PR_t$.

Il est donc nécessaire de réaliser une conversion de la consigne sur la pression dans le collecteur d'admission, en une consigne sur le régime du turbocompresseur. On transforme la consigne en pression ($P_i^C$) en régime désiré ($N_d$).

Cette transformation est réalisée à partir de la cartographie compresseur ($CC$) donnée par le constructeur. Il s'agit d'une courbe permettant de déterminer le régime en fonction de la pression dans le collecteur d'admission.

3.- <u>Définition d'une loi de commande de l'actionneur de la turbine, $U_{VGT}^C$.</u>

Il s'agit, dans cette étape, de générer la commande réelle commandant l'actionneur de la turbine et permettant de contrôler le turbocompresseur. Cette commande est notée $U_{VGT}^C$.

En fonction de la pression de consigne $P_i^C$, on détermine le régime désiré $N_d$. Puis, à l'aide du modèle physique, on calcule un rapport désiré des pressions au niveau de la turbine, $PR_t^C$.

On mesure par ailleurs le débit de fluide entrant dans la turbine $W_t^m$.

On dispose d'une cartographie de la turbine, fournie par le constructeur. Cette cartographie représente l'évolution du débit de fluide entrant dans la turbine $W_t$ en fonction du rapport des pressions au niveau de la turbine, $PR_t$, pour différentes lois de commande $U_{VGT}1$, $U_{VGT}2$, $U_{VGT}3$,...

Enfin, à partir de la cartographie, de $PR_t^C$ et de $W_t^m$, on estime la loi de commande de l'actionneur de la turbine, $U_{VGT}^C$.

Ceci peut être réalisé en approximant la cartographie turbine par les équations suivantes:

$$W_t = \left(a.G(U_{vGT}) + b\right)\Psi(PR_t) \qquad (6)$$

où :
$G(U_{VGT})$ est une fonction polynomial bijective de $U_{VGT}$ et

$$\Psi(PR_t) = \sqrt{\frac{2\gamma.PR_t}{\gamma(\gamma-1)}}.\sqrt{PR_t^{\frac{-2}{\gamma}} - PR_t^{\frac{-\gamma-1}{\gamma}}} \qquad (7)$$

Ainsi on peut estimer $U_{VGT}^C$, avec : $PR_t = PR_t^C$

Les deux paramètres $a$ et $b$ peuvent être identifiés par optimisation hors ligne, en utilisant les caractéristiques de la turbine. Ces deux paramètres dépendent du régime du turbocompresseur mais cette dépendance est lente et peut être tenue en compte dans la stratégie de commande.

En pratique le paramètre *b* peut être corrigé en ligne par un intégrateur de façon à ce que le rapport de pression turbine suive celui désiré.

L'interprétation des équations (6) et (7) est que la turbine peut être représentée comme un orifice avec une section qui dépend de la commande $U_{VGT}$. L'équation standard donnant le débit comme étant une fonction du rapport de pression a été modifiée afin que le modèle considéré représente mieux la caractéristique de la turbine.

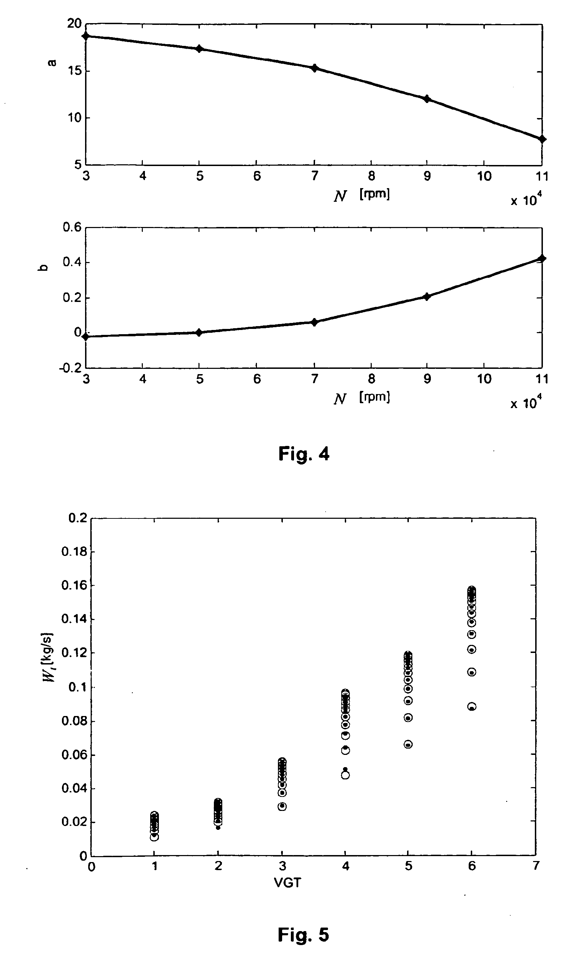

La figure 4 montre les deux paramètres *a* et *b* en fonction du régime turbocompresseur (*N*) modifié.

La figure 5 montre une comparaison entre le débit turbine donné par le constructeur (cercle) et l'estimation (croix), en fonction de la position de l'actionneur de la turbine (VGT). On observe une excellente corrélation.

4.- Modification de la géométrie de la turbine selon la loi de commande $U_{VGT}^{C}$

La dernière étape consiste à appliquer la loi de commande $U_{VGT}^{C}$ à l'actionneur de la turbine, de façon à modifier la géométrie de la turbine. Cet actionneur, en changeant de position, modifie le débit de fluide entrant dans la turbine, de façon à ce que la pression $P_i$ dans le collecteur d'admission soit égale à la pression de consigne $P_i^{C}$.

L'actionneur peut être une valve de type «*wastegate*» dans le cas d'un turbocompresseur à géométrie fixe, ou des pales (actionneur dit « *VGT* ») de la turbine dans le cas d'un turbocompresseur avec turbine à géométrie variable.

**Résultats**

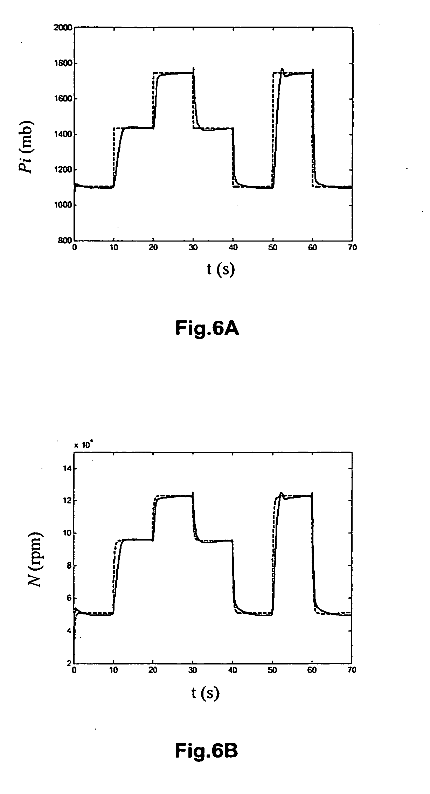

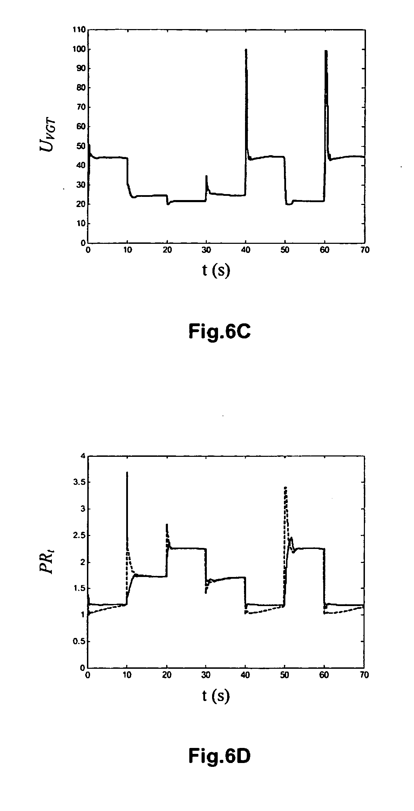

Les figures 6A à 6B illustrent des résultats de contrôle selon l'invention. Les courbes en traits pleins représentent les mesures réelles, alors que les courbes en pointillés représentent l'estimation selon le procédé. La figure 6A montre l'évolution de la pression $P_i$ dans le collecteur d'admission en fonction du temps *t*. La figure 6B montre l'évolution du régime du turbocompresseur (*N*) en fonction du temps *t*. La figure 6C montre l'évolution de la loi de commande $U_{VGT}^{C}$ en fonction du temps *t*. Enfin, la figure 6D montre l'évolution du rapport des pressions au niveau de la turbine ($PR_t$) en fonction du temps t.

Ces résultats montrent la performance du procédé proposé : le pré - positionnement donné par la loi de commande proposée permet de définir d'une façon dynamique une pression d'échappement désirée qui est transformée en une commande VGT qui permet de suivre rapidement la trajectoire du régime souhaité obtenue à partir de la trajectoire de pression d'admission demandée.

**Avantages**

Le procédé permet d'utiliser une loi de commande linéaire, donc simple, facile à mettre au point, et sans qu'il soit besoin de faire varier ses paramètres selon le point de fonctionnement du système (valide en dynamique). Le procédé offre ainsi certains avantages :

- elle permet de faciliter la mise au point du régulateur, aussi bien pour les aspects statiques (pré-positionnements) que dynamiques ;

- l'utilisation de grandeurs physiques ou de caractérisation dans le modèle entraîne une diminution du nombre d'essais nécessaires pour la mise au point ;

- les interactions entre le système considéré et les autres sous systèmes du moteur (EGR, combustion, ou même conditions extérieures) sont prises en compte dans le modèle, ce qui permet de rendre la mise au point du régulateur indépendante de ces autres sous systèmes ;

- les méthodes classiques de régulation de turbocompresseurs sont basées sur des cartographies correspondant à des points de fonctionnement statiques. On fait alors l'hypothèse qu'en dynamique, le système passe par une succession d'états stationnaires (quasi statique). Avec la loi de contrôle proposée, le modèle est valide en dynamique, on n'a plus besoin de faire cette hypothèse ;

- la loi de commande est généralisable à plusieurs technologies de turbocompresseurs : turbocompresseur à géométrie fixe (l'actionneur est constitué d'une valve de type « *wastegate* »), turbocompresseur avec turbine à géométrie variable (l'actionneur est constitué des pales de la turbine). Elle peut s'adapter facilement à différentes configurations systèmes grâce à la prise en compte d'équations physiques : turbocompresseur double étage, moteur avec EGR HP ou BP, moteur à admission variable, ...

**Revendications**

1. Procédé pour contrôler un turbocompresseur comportant une turbine et équipant un moteur à combustion interne, dans lequel on détermine une pression de consigne $P_i^C$, correspondant à une pression de fluide dans un collecteur d'admission du moteur, **caractérisée en ce que** le procédé comporte les étapes suivantes :

   - on transforme ladite consigne de pression $P_i^C$ en une valeur de régime du turbocompresseur désirée $N_d$ ;
   - on définit une relation physique reliant un régime $N$ du turbocompresseur à un rapport $PR_t$ d'une pression de fluide en sortie de la turbine sur une pression de fluide en entrée de la turbine ;
   - on calcule un rapport désiré $PR_i^C$ des pressions au niveau de la turbine, en appliquant ladite relation à ladite valeur de régime désirée $N_d$;
   - on estime une loi de commande d'un actionneur de la turbine, $U_{VGT}^C$, au moyen d'une cartographie de la turbine représentant une évolution d'un débit de fluide entrant dans la turbine $W_t$ en fonction du rapport des pressions au niveau de la turbine, $PR_t$, pour différentes lois de commande de l'actionneur, et à partir d'une mesure du débit de fluide entrant dans la turbine $W_t^m$, , du rapport désiré des pressions au niveau de la turbine, $PR_t^C$; et
   - on applique ladite loi de commande $U_{VGT}^C$ à l'actionneur de la turbine, de façon à ce que la pression $P_i$ dans le collecteur d'admission soit égale à la pression de consigne $P_i^C$.

2. Procédé selon la revendication 1, dans lequel l'actionneur est une valve de type *« wastegate »*.

3. Procédé selon la revendication 1, dans lequel l'actionneur correspond aux pales de la turbine.

4. Procédé selon l'une des revendications précédentes, dans lequel on transforme ladite consigne de pression ($P_i^C$) en une valeur de régime désiré ($N_d$), à l'aide de cartographie d'un compresseur équipant ledit turbocompresseur.

5. Procédé selon l'une des revendications précédentes, dans lequel la relation physique est obtenue à partir d'une relation d'équilibre entre une puissance turbine et une puissance compresseur, en appliquant un principe d'équilibre de masses dans le collecteur d'admission et un collecteur d'échappement, et en appliquant une technique de "*back-stepping"* dans laquelle on définit une commande qui force le régime du turbocompresseur à suivre une dynamique donnée.

6. Procédé selon la revendication 5, dans lequel on choisit une dynamique exponentielle, qui s'exprime de la façon suivante :

$$\frac{d(N - N_d^2)}{dt} = -\mu\left(N - N_d^2\right)$$

où $\mu$ est un gain défini expérimentalement.

7. Procédé selon l'une des revendications précédentes, dans lequel on estime la loi de commande en approximant la cartographie de la turbine.

8. Procédé selon la revendication 7, dans lequel on approxime la cartographie de la turbine, par des équations du type ;

$$W_t = \left(a.G(U_{VGT}) + b\right)\Psi(PR_t)$$

avec :

   $a, b$ : deux paramètres à identifier
   $U_{VGT}$ : une loi de commande de l'actionneur
   $G(U_{VGT})$ : une fonction polynomiale bijective de $U_{VGT}$

$$\Psi(PR_t) = \sqrt{\frac{2\gamma . PR_t}{\gamma(\gamma-1)}} \cdot \sqrt{PR_t^{\frac{-2}{\gamma}} - PR_t^{\frac{-\gamma-1}{\gamma}}}$$

$\gamma$ : rapport de chaleur spécifique

**9.** Procédé selon la revendication 8, dans lequel les deux paramètres *a* et *b* sont identifiés par optimisation hors ligne.

**10.** Procédé selon la revendication 9, dans lequel les deux paramètres *a* et *b* sont corrigés en ligne par un intégrateur, de façon à ce que le rapport de pression turbine $PR_t$ suive celui désiré $PR_t^C$.

**Claims**

**1.** A method for controlling a turbocharger comprising a turbine and equipping an internal-combustion engine, wherein a setpoint pressure $P_i^c$ corresponding to a fluid pressure in an intake manifold of the engine is determined, **characterized in that** the method comprises the following stages:

- converting said setpoint pressure $P_i^c$ to a desired turbocharger speed value $N_d$,
- defining a physical relation connecting a speed $N$ of the turbocharger to a ratio $PR_f$ of a fluid pressure at the turbine outlet to a fluid pressure at the turbine inlet,
- calculating a desired ratio $PR_t^c$ of the pressures in the turbine, by applying said relation to said desired speed value $N_d$,
- estimating a control law $U_{VGT}^C$ for a turbine actuator by means of a map of the turbine representing an evolution of a fluid flow rate $W_t$ entering the turbine as a function of the pressure ratio in the turbine, $PR_t$, for various actuator control laws, and from a measurement of the fluid flow rate $W_t^m$ entering the turbine, of the desired pressure ratio in the turbine $PR_t^c$, and
- applying said control law $Uv_{GT}^C$ to the turbine actuator so that pressure $Pi$ in the intake manifold is equal to setpoint pressure $P_i^c$.

**2.** A method as claimed in claim 1, wherein the actuator is a wastegate type valve.

**3.** A method as claimed in claim 1, wherein the actuator corresponds to the blades of the turbine.

**4.** A method as claimed in any one of the previous claims, wherein said setpoint pressure ($P_i^C$ is converted to a desired speed value ($N_d$) by means of maps of a compressor equipping said turbocharger.

**5.** A method as claimed in any one of the previous claims, wherein the physical relation is obtained from an equilibrium relation between a turbine power and a compressor power, by applying a mass equilibrium principle in the intake manifold and an exhaust manifold, and by applying a back-stepping technique wherein a control that forces the turbocharger speed to follow a given dynamics is defined.

**6.** A method as claimed in claim 5, wherein an exponential dynamics expressed as follows is selected:

$$\frac{d(N - N_d^2)}{dt} = -\mu\left(N - N_d^2\right)$$

where $\mu$ is an experimentally defined gain.

**7.** A method as claimed in any one of the previous claims, wherein the control law is estimated by approximating the turbine map.

**8.** A method as claimed in claim 7, wherein the turbine map is approximated by means of equations of the type as follows:

$$W_t = \left(a.G(U_{VGT}) + b\right).\Psi(PR_t)$$

with:

> $a$, $b$ : two parameters to be identified
> $U_{VGT}$ : an actuator control law
> $G(U_{VGT})$ : a bijective polynomial function of $U_{VGT}$

$$\Psi(PR_t) = \sqrt{\frac{2\gamma.PR_t}{\gamma(\gamma-1)}}.\sqrt{PR_t^{\frac{-2}{\gamma}} - PR_t^{\frac{-\gamma-1}{\gamma}}}$$

> $\gamma$ : specific heat ratio.

9. A method as claimed in claim 8, wherein the two parameters a and b are identified by off-line optimization.

10. A method as claimed in claim 9, wherein the two parameters $a$ and $b$ are corrected on-line by an integrator, so that the turbine pressure ratio $PR_t$ follows the desired ratio $PR_t{}^c$.

**Patentansprüche**

1. Verfahren zum Steuern eines Turboverdichters, der eine Turbine umfasst und einen Verbrennungsmotor ausrüstet, in dem ein Sollwertdruck $P_i^c$ bestimmt wird, der einem Fluiddruck in einer Ansaugleitung des Motors entspricht, **dadurch gekennzeichnet, dass** das Verfahren die folgenden Schritte umfasst:

   - Umwandeln des Drucksollwerts $P_i^C$ in einen gewünschten Drehzahlwert $N_d$ des Turboverdichters;

   - Bestimmen einer physikalischen Beziehung, die eine Drehzahl $N$ des Turboverdichters mit einem Verhältnis $PR_i$ eines Fluiddrucks am Ausgang der Turbine zu einem Fluiddruck am Eingang der Turbine verbindet;

   - Berechnen eines gewünschten Verhältnisses der $PR_i^C$ Drücke an der Turbine unter Anwendung der Beziehung auf den gewünschten Drehzahlwert $N_d$;
   - Schätzen eines Steuerungsgesetzes $U_{VGT}c$ eines Stellglieds der Turbine mittels eines Kennfelds der Turbine, das eine Entwicklung eines Durchsatzes $W_i$ des in die Turbine eintretenden Fluids darstellt, in Abhängigkeit vom Verhältnis der Drücke an der Turbine, $PR_i$, für verschiedene Steuerungsgesetze des Stellglieds und ausgehend von einer Messung des in die Turbine eintretenden Fluiddurchsatzes $W_i^m$, vom gewünschten Verhältnis der Drücke an der Turbine $PR_i^C$; und

   - Anwenden des Steuerungsgesetzes $U_{VGT}c$ auf das Stellglied der Turbine, derart, dass der Druck $P_i$ in der Ansaugleitung gleich dem Sollwertdruck $P_i^C$ ist.

2. Verfahren nach Anspruch 1, wobei das Stellglied ein Ventil vom Typ "Wastegate" ist.

3. Verfahren nach Anspruch 1, wobei das Stellglied den Schaufeln der Turbine entspricht.

4. Verfahren nach einem der vorhergehenden Ansprüche, wobei der Drucksollwert ($P_i^C$) mittels des Kennfelds eines Verdichters, der den Turboverdichter ausrüstet, in einen gewünschten Drehzahlwert ($N_d$) umgewandelt wird.

5. Verfahren nach einem der vorhergehenden Ansprüche, wobei die physikalische Beziehung ausgehend von einer Gleichgewichtsbeziehung zwischen einer Turbinenleistung und einer Verdichterleistung, durch Anwenden eines Massengleichgewichtsprinzips in der Ansaugleitung und einer Abgasleitung und durch Anwenden einer "Backstepping-Technik" erhalten wird, in der ein Befehl definiert wird, der die Drehzahl des Turboverdichters zwingt, einer gegebenen Dynamik zu folgen.

6. Verfahren nach Anspruch 5, wobei eine exponentielle Dynamik gewählt wird, die auf die folgende Weise ausgedrückt wird:

$$\frac{d(N - N_d^2)}{d_t} = \mu(N - N_d^2)$$

wo $\mu$ ein experimentell definierter Verstärkungsfaktor ist.

7. Verfahren nach einem der vorhergehenden Ansprüche, wobei das Steuerungsgesetz durch Annähern des Kennfelds der Turbine geschätzt wird.

8. Verfahren nach Anspruch 7, wobei das Kennfeld der Turbine durch Gleichungen des folgenden Typs angenähert wird:

$$w_i = (a, G(U_{VGT}) + b), \psi(PR_i)$$

wobei:

a, b: zwei zu identifizierende Parameter sind
$U_{VGT}$: ein Steuerungsgesetz des Stellglieds ist
$G(U_{VGT})$: eine eineindeutige polynomische Funktion von $U_{VGT}$ ist

$$\psi(PR_i) = \sqrt{\frac{2\gamma . PR_i}{\gamma(\gamma - 1)} . \sqrt{PR_i^{\frac{-2}{\gamma}} - PR_i^{\frac{-\gamma-1}{\gamma}}}}$$

$\gamma$: das Verhältnis der spezifischen Wärmekapazitäten ist.

9. Verfahren nach Anspruch 8, wobei die zwei Parameter a und b durch Offline-Optimierung identifiziert werden.

10. Verfahren nach Anspruch 9, wobei die Parameter a und b derart durch einen Integrator online korrigiert werden, dass das Turbinendruckverhältnis $PR_i$ dem gewünschten Verhältnis $PR_i^C$ folgt.

**Fig. 1**

**Fig. 2**

**Fig. 3**

**Fig. 4**

**Fig. 5**

16

**Fig.6A**

**Fig.6B**

**Fig.6C**

**Fig.6D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003101723 A

**Littérature non-brevet citée dans la description**

- **SCHWARZMANN, D. ; NITSCHE, R. ; LUNZE, J.** Diesel Boost Pressure Control using Flatness-Based Internal Model Control. *SAE paper 2006-01-0855*
- **STEFANOPOULO, A.G ; KOLMANOWSKY, I. ; FREUDENBERG, J.S.** Control of Variable Geometry Turbocharged Diesel Engines for Reduced Emissions. *IEEE transactions on control systems technology,* Juillet 2000, vol. 8 (4

- Nonlinear and adaptive control design. **KRISTICA-CUTE M. ; KANELLAKOUPOULOS I. ; KOKO-TOVIC P.V.** Control System Technology and Automation. Wiley, 1995